# EUROPÄISCHE PATENTANMELDUNG

(11) **EP 2 330 167 A1**
(43) Veröffentlichungstag der Anmeldung: **08.06.2011**
(21) Anmeldenummer: 10191155.0
(22) Anmeldetag: 15.11.2010
(51) Int. Cl.: C09J 7/02, B32B 27/32

(54) **Verwendung eines handeinreißbaren Klebebandes für Bauanwendungen**

(30) Priorität: 27.11.2009 DE 102009047256
(71) Anmelder: tesa SE, 20253 Hamburg (DE)
(72) Erfinder: Behrens, Nicole Dr., 81241, München (DE); Müssig, Bernhard Dr., 21218, Seevetal (DE); Spies, Manfred Dr., 24576, Bad Bramstedt (DE); Lühmann, Bernd Dr., 22844, Norderstedt (DE)

(57) **Zusammenfassung**

Die Erfindung betrifft eine Verwendung eines Montagebandes zum Verkleben auf rauen und/oder verschmutzten Oberflächen, bevorzugt als ein- beziehungsweise doppelseitig klebendes Montageband für die Verklebung von Winddichtungen, Dampfbremsen und Dampfsperren, bestehend aus einer Trägerfolie und einer zumindest einseitig auf der Trägerfolie aufgebrachten Klebemasse, wobei die Trägerfolie ein Copolymer aus (a) einem α-Olefin der Formel R-CH=CH₂, wobei R Wasserstoff oder ein Alkylrest mit 1 bis 10 Kohlenstoffatomen ist, und (b) einer α,β-ethylenisch ungesättigten Carbonsäure aus 3 bis 8 Kohlenstoffatomen sowie (c) optional aus einem weiteren monoethylenisch ungesättigten Monomer, wobei die Carbonsäuregruppen des Copolymers zu 10 bis 90 % durch Neutralisation mit Metallionen substituiert sind, enthält und die Haftklebemasse ein Polyacrylat ist.

## Beschreibung

Die Erfindung betrifft die Verwendung eines handeinreißbaren Klebebands für Verklebungen auf rauen oder verschmutzten Untergründen, insbesondere als Montageband in der Bauindustrie.

Montagebänder für Winddichtungen, Dampfbremsen und Dampfsperren werden beim Innenausbau von Häusern nach dem Befestigen von wärmedämmenden Materialien an Wänden, Dachflächen und ähnlichem verwendet, um die in Form von Folien vorliegenden Winddichtungen, Dampfbremsen und Dampfsperren zu verkleben. Zum Befestigen auf verschiedensten Untergründen sowie zum Verkleben der entstehenden Überlappungsstellen der entsprechenden Dampfbremsen, Dampfsperren und Winddichtungen werden einseitig oder doppelseitig klebende Montagebänder eingesetzt.

An alle im Baubereich verwendeten Klebebänder werden hohe Anforderungen im Bezug auf ihre Resistenz gegenüber Chemikalien, Klebefähigkeit, insbesondere auch bei Temperaturen bis 0 °C, Alterungsbeständigkeit und Abdichtungsfähigkeit gestellt. Gemein ist allen Anwendungen, dass die Verklebung auf verschmutzten und/oder rauen Untergründen, wie zum Beispiel Betonoberflächen oder Holzsparren, sicher haften muss. Anforderungen, die vor allem Montagebänder zum Verkleben von Winddichtungen betreffen, sind Alterungsbeständigkeit und gute Klebeeigenschaften auch auf Oberflächen mit geringer Oberflächenenergie wie zum Beispiel auf PE-Folien.

Aus dem Stand der Technik ist ein einseitig klebendes Montageband für die Verklebung von Winddichtungen, Dampfbremsen und Dampfsperren bekannt, das aus einer Folie und einer Acrylatklebemasse mit einem hohen Masseauftrag von mehr als 80 g/m² besteht.

In der Praxis werden Klebebänder mit Masseaufträgen von ca. 200 g/m² angeboten. Ein hoher Masseauftrag ist vor allem für Verklebungen auf sägerauem Holz und verunreinigten und verstaubten Oberflächen notwendig.

Für Verklebung von Winddichtungen wird vom Hersteller oft eine Alterungsbeständigkeit von mindestens fünf Jahren garantiert, daher ist der Einsatz einer alterungsbeständigen Klebemasse sehr wichtig. Die Verwendung einer lösungsmittelfrei herstellbaren Kautschuk-Klebemasse kommt aufgrund dessen nur eingeschränkt in Frage.

Weiterhin ist eine einfache Verarbeitbarkeit des Klebebands wünschenswert. Gegenwärtig wird die Verarbeitbarkeit in der Regel durch die Bereitstellung von Hilfsmitteln, wie ein an einer Person zu tragendes Abrollgerät mit eingebauter Klinge, erleichtert. Da nur wenige der käuflichen Montagebänder handeinreißbar sind, ist für die meisten die Verwendung dieses Abrollgeräts oder einer Schere zwingend.

Handeinreißbare Montagebänder weisen nach dem Stand der Technik einen mit Kunststoff beschichteten Papierträger auf, der allerdings aufgrund der Steifheit des Trägers nur für Verklebungen auf ebenen Flächen (zum Beispiel Überlappungen von Dampfbremsen, Dampfsperren und Winddichtungen) geeignet ist. Ein solches Montageband wird in der WO 97/32940 A1 beschrieben. Für Anwendungen, für die ein flexibles Klebeband benötigt wird (zum Beispiel Durchdringungen von Rohren und Kabeln, Verklebungen in Ecken, Anschluss von Fenstern), kann das handelsübliche handeinreißbare Montageband nicht verwendet werden. Für diese Einsatzgebiete wird ein Klebeband mit einem Trägermaterial aus Polyethylen-Folie angeboten. Dieses Trägermaterial ist flexibel, aber nicht handeinreißbar. Neben der Notwendigkeit, Hilfsmittel zum Schneiden des Polyethlyen-Trägermaterials einzusetzen, ist für den Anwender auch der Einsatz von mindestens zwei verschiedenen Montagebändern unvorteilhaft.

Die genannten Schriften zum Stand der Technik führen trotz der genannten Nachteile keine Trägermaterialien auf, die die Kombination der Anforderungen von Handeinreißbarkeit, Flexibilität und Wasser- und Alterungsbeständigkeit erfüllen. Daher ist gegenwärtig die Verwendung von mindestens zwei verschiedenen Montagebändern für die Verklebung von Winddichtungen, Dampfbremsen und Dampfsperren üblich; welches der Montagebänder eingesetzt wird, entscheidet sich jeweils anhand der Elemente, mit der die Winddichtungen, Dampfbremsen und Dampfsperren verbunden werden müssen.

Ein polyolefinisches Trägermaterial, das Copolymere mit ionogenen Gruppen enthält, wird in der DE 102 39 985 A1 für den Einsatz als Abdichtungsband im Baubereich beschrieben. Dieses Trägermaterial ist allerdings nicht handeinreißbar.

Es gibt weiterhin eine Anzahl von Folienklebebändern, die jedoch nicht als Montageband geeignet sind. Im Fall von Polyester- oder orientierten Polypropylen-Trägern weisen sie eine sehr geringe Flexibilität auf. Nicht verstreckte Polyethylen- oder Polypropylen-Träger (aus Cast- oder Blasprozess) können durchaus hinreichend flexibel sein, sind jedoch nicht handeinreißbar und/oder sauber abreißbar (hohe Bruchdehnungen) wie selbst dem Nichtfachmann von Haushaltsbeuteln oder Tragetaschen bekannt ist. Der Einsatz von Weich-PVC wird aufgrund seines Halogen- und Weichmachergehalts vom Endverbraucher in der Regel kritisch gesehen. Die Rohstoffkosten von Geweben liegen deutlich über denen von Polyolefin- oder PVC-Folien. Daher ist der Einsatz dieser Trägermaterialien in Montagebändern im Baubereich unvorteilhaft.

Aufgabe der Erfindung ist es daher, hier Abhilfe zu schaffen und ein Montageband für Bauanwendungen zur Verfügung zu stellen, das gleichzeitig handeinreißbar und flexibel ist. Die Aufgabe wird durch die Verwendung eines Klebebands gelöst, wie sie im Hauptanspruch niedergelegt ist. Vorteilhafte Weiterbildungen des Erfindungsgegenstands finden sich in den Unteransprüchen.

Demgemäß betrifft die Erfindung die Verwendung eines Montagebandes zum Verkleben auf rauen und/oder verschmutzten Oberflächen, bevorzugt als ein- beziehungsweise doppelseitig klebendes Montageband für die Verklebung von Winddichtungen, Dampfbremsen und Dampfsperren, bestehend aus einer Folie sowie einer alterungsbeständigen Klebstoffschicht basierend auf Polyacrylaten. Die Folie enthält ein Copolymer aus
(a) einem α-Olefin der Formel R-CH=CH₂, wobei R Wasserstoff oder ein Alkylrest mit 1 bis 10 Kohlenstoffatomen ist, und
(b) einer α,β-ethylenisch ungesättigten Carbonsäure aus 3 bis 8 Kohlenstoffatomen sowie
(c) optional einem weiteren monoethylenisch ungesättigten Monomer, wobei die Wasserstoffatome der Carbonsäuregruppen des Copolymers zu 10 bis 90 % durch Neutralisation durch Metallionen substituiert sind.

Das angegebene Montageband ist leicht (hand-)reißbar und flexibel.

Die Dicke der Trägerfolie des Montagebands liegt im Bereich von 30 bis 150 µm, bevorzugt 50 bis 100 µm. Die Oberfläche kann strukturiert oder glatt sein.

Die mechanischen Eigenschaften des Montagebandes liegen in MD (Maschinenrichtung) beziehungsweise CD (Querrichtung) bevorzugt in den folgenden Bereichen:
- Reißdehnung (MD) von 150 bis 500 %, besonders bevorzugt von 150 bis 300 %,
- Reißkraft (MD) im Bereich von 6 bis 40 N/cm, besonders bevorzugt von 8 bis 15 N/cm,
- Einreißfestigkeit (CD) zwischen 3,0 und 6,7 N, besonders bevorzugt zwischen 3,0 und 5,5 N
- Weiterreißfestigkeit (CD) von 5 bis 20 N, besonders bevorzugt von 8 bis 15 N

Die Folie wird dabei zur Ermittlung der Daten mit scharfen Klingen zugeschnitten beziehungsweise gestanzt.

Besonders bevorzugt ist die Verarbeitung durch Blasextrusion, da die Trägerfolie sich in Querrichtung besonders leicht abreißen von Hand lässt. In einer bevorzugten Ausführung der Blasextrusion werden die Verarbeitungsparameter so eingestellt, dass die Einreißfestigkeit in Längsrichtung mindestens das Doppelte der Einreißfestigkeit in Querrichtung beträgt, wobei die Reißfestigkeit nach ASTM D1004 bestimmt wird.

Der bevorzugte Schmelzindex liegt zwischen 0,2 und 10 g/10 min, insbesondere zwischen 0,4 und 5 g/10 min bei 2,16 kg und 190 °C.

Bevorzugte Verarbeitungsparameter sind:
- Längsstreckverhältnis (Verhältnis Wickelgeschwindigkeit der Folie zu Geschwindigkeit der Schmelze in der Düse) von 2 bis 25, vorzugsweise von 5 bis 10
- Frostlinie kleiner als 160 cm
- Längsstreckverhältnis dividiert durch Frostlinie größer als 0,1 cm⁻¹, vorzugsweise größer als 0,2 cm⁻¹
- Aufblasverhältnis im Bereich von 1 bis 4, vorzugsweise von 1,8 bis 2,5
- Düsenspalt im Bereich von 1 bis 1,6 mm

Die Verfahrensparameter können dabei einzeln, in beliebiger Kombination oder gesamthaft verwirklicht sein.

Die Herstellung erfindungsgemäß verwendeter Copolymere ist zum Beispiel in der US 3,264,272 A1 beschrieben.

Der Begriff Copolymer ist dahingehend zu verstehen, dass es auch mehrere unterschiedliche α-Olefine oder ungesättigte Carbonsäuren enthalten kann. Das ungesättigte α-Olefin ist vorzugsweise Ethylen, Propylen oder Buten-(1), besonders bevorzugt Ethylen. Die ungesättigte Carbonsäure kann eine Mono- oder Dicarbonsäure wie Methacrylsäure oder Maleinsäure sein. Die Metallionen sind vorzugsweise ein- bis dreiwertig, zum Beispiel aus den Gruppen I, II, III, IV-A und VII des Periodensystems, besonders bevorzugt aus der Gruppe der Alkalimetalle, insbesondere Natrium.

Die Folienschicht des Montagebandes kann neben dem erfindungsgemäßen Copolymer andere Polymere enthalten, wobei der Anteil an erfindungsgemäßem Copolymer vorzugsweise mindestens 10 Gew.-% und besonders bevorzugt mindestens 50 Gew.-% beträgt.

Gemäß einer weiteren vorteilhaften Ausführungsform beträgt der Anteil an erfindungsgemäßem Copolymer 100 Gew.-%, besteht die Folie also nur aus dem besagten Polymer.

Dem Fachmann ist dabei natürlich bekannt, dass dem Polymer der Folie darüber hinaus noch geringe Anteile an Additiven wie Füllstoffen, Pigmenten, Alterungsschutzmitteln, Nukleierungsmitteln, Impactmodifier, Lichtschutz-, Flammschutz- und/oder Gleitmitteln (üblicherweise mit einem (Gesamt-)Anteil von bis 5 Gew.-%) zugesetzt sein können.

Die Folie kann aus mehreren einzelnen Schichten bestehen, wobei mindestens eine der Schichten die genannten Anteile enthält.

Eine optionale Abmischkomponente für das beschriebene Copolymer sollte in einer weiteren bevorzugten Ausführungsform bei 190 °C keinen wesentlich höheren Schmelzindex aufweisen als das erfindungsgemäße Copolymer sondern bevorzugt einen niedrigeren. Geeignete Abmischkomponenten sind zum Beispiel weiche Ethylencopolymere wie LDPE, LLDPE, VLDPE, MDPE, HDPE, Metallocen-PE, EPM oder EPDM vorzugsweise mit einer Dichte von 0,86 bis 0,96 g/cm³. Polybuten(1)- oder weiche Polybuten- oder Polypropylencopolymere mit Random- oder Blockstruktur sind ebenfalls geeignet, weisen jedoch vorzugsweise einen Kristallitschmelzpunkt von weniger als 145 °C auf. Bevorzugt werden Polymere auf Ethylenbasis.

Besonders bevorzugt ist die copolymerhaltige Folienschicht mit einer weiteren Folienschicht coextrudiert, welche ein Polymer, insbesondere eines auf Ethylenbasis, enthält, wobei das Polymer vorzugsweise einen Schmelzindex von weniger als 10 g/10 min, insbesondere von weniger als 6 g/10 min, aufweist.

Das Montageband enthält nicht zwangsläufig, aber vorzugsweise ein Flammschutzmittel, und zwar in der Trägerfolie und/oder der oder den Klebemassen.

Dafür kommen als halogenfreie Materialien beispielsweise Füllstoffe wie Polyphosphate, Carbonate und Hydroxide des Aluminiums oder des Magnesiums, Borate, Stannate, Flammschutzmittel auf Stickstoffbasis wie Melamincyanurat, Dicyandiamid, roter Phosphor oder sterisch gehinderte Amine wie zum Beispiel die Klasse der HA(L)S in Frage. Halogenierte Flammenhemmstoffe sind in Zusammensetzungen der Erfindung auch nützlich. Bevorzugte halogenhaltige Flammschutzmittel umfassen Decabromdiphenyloxid, Decabromdiphenylmethan (Saytex 8010, Albemarle Corp., Baton Rouge, USA) und Dodecachlordimethandibenzocycloocten.

Wichtig ist eine Alterungsstabilisierung zur Erreichung der oxidativen Beständigkeit. Dafür kommen primäre und sekundäre Antioxidantien zum Einsatz, wie sie den Fachmann zum Beispiel unter den Handelsnamen Irganox und Irgafos bekannt sind. Soweit das Montageband in der Endanwendung dem Licht ausgesetzt ist, werden Lichtschutzmittel eingesetzt also UV-Absorber oder UV-Stabilisatoren, die dem Fachmann zum Beispiel als Tinuvin oder Chimassorb geläufig sind.

Dabei ist auch die Gesamtmenge an Stabilisator zu berücksichtigen, da bei den bisherigen Versuchen zur Herstellung solcher Montagebänder keine oder nur weniger als 0,3 phr Alterungsschutzmittel verwendet wurden, wie es auch bei Herstellung sonstiger Folien üblich ist. Die erfindungsgemäßen Montagebänder enthalten in der bevorzugten Ausführungsform mehr als 0,3 und insbesondere mehr als 1 phr Antioxidans (worin ein optional verwendeter Metalldesaktivator nicht eingerechnet ist). Vorzugsweise liegt der Anteil bei maximal 5 phr. (Die angegeben Werte beziehen sich jeweils auf die Folie.)

In einer bevorzugten Ausführungsform liegt der Anteil an sekundärem Antioxidans bei mehr als 0,3 phr. Sekundäre Antioxidantien bauen Peroxide ab und werden daher zum Beispiel bei Dienelastomeren als Teil von Alterungsschutzpaketen verwendet.

Überraschend ist, dass eine Kombination von primären Antioxidantien (zum Beispiel sterisch gehinderten Phenolen oder C-Radikalfängern wie CAS 181314-48-7) und sekundären Antioxidantien (zum Beispiel Schwefelverbindungen, Phosphiten oder sterisch gehinderten Aminen), wobei die beiden Funktionen auch in einem Molekül vereinigt sein können, die Aufgabe löst. Vor allem wird die Kombination von primärem Antioxidans, vorzugsweise sterisch gehinderten Phenolen mit einem Molekulargewicht von mehr als 500 g/mol (vor allem > 700 g/mol), mit einem phosphitischen sekundären Antioxidans (vor allem mit einem Molekulargewicht > 600 g/mol) bevorzugt. Insbesondere ist die Kombination aus einem wenig flüchtigen primären phenolischen Antioxidans und jeweils einem sekundären Antioxidans aus der Klasse der Schwefelverbindungen (bevorzugt mit einem Molekulargewicht von mehr als 400 g/mol, insbesondere > 500 g/mol) und aus der Klasse der Phosphite geeignet, wobei die phenolische, die schwefelhaltigen und die phosphitische Funktionen nicht in drei verschiedenen Molekülen vorliegen müssen, sondern auch mehr als eine Funktion in einem Molekül vereinigt sein kann.

Beispiele:
- Phenolische Funktion:
   CAS 6683-19-8 , 2082-79-3, 1709-70-2, 36443-68-2, 1709-70-2, 34137-09-2, 27676-62-6, 40601-76-1, 31851-03-3, 991-84-4
- Schwefelhaltige Funktion:
   CAS 693-36-7, 123-28-4, 16545-54-3, 2500-88-1
- Phosphitische Funktion:
   CAS 31570-04-4, 26741-53-7, 80693-00-1, 140221-14-3, 119345-01-6, 3806-34-6, 80410-33-9, 14650-60-8, 161717-32-4
- Phenolische und schwefelhaltige Funktion:
   CAS 41484-35-9, 90-66-4, 110553-27-0, 96-96-5, 41484
- Phenolische und aminische Funktion:
   CAS 991-84-4, 633843-89-0
- Aminische Funktion:
   CAS 52829-07-9, 411556-26-7, 129757-67-1, 71878-19-8, 65447-77-0

Beispielhaft erwähnte und besonders geeignete Alterungsschutzmittel sind:
Irganox 1726: phenolisches Antioxidans mit Schwefel basierter Funktion eines sekundären Antioxidans
Irganox 1076: phenolisches Antioxidans (Octadecyl-3-(3,5-di-tert.butyl-4-hydroxyphenyl)-propionat), CAS 2082-79-3
Irganox PS 802: Schwefel-basiertes sekundäres Antioxidans
Irganox 1010: sterisch gehindertes Phenol, CAS 6683-19-8
Irgafos 168: sekundäres phosphitisches Antioxidans (der Firma Ciba)

Die Kombination von CAS 6683-19-8 (zum Beispiel Irganox 1010) mit Thiopropionsäureester CAS 693-36-7 (Irganox PS 802) oder 123-28-4 (Irganox PS 800) und mit CAS 31570-04-4 (Irgafos 168) ist besonders bevorzugt. Bevorzugt ist des Weiteren eine Kombination, bei welcher der Anteil an sekundärem Antioxidans den des primären übersteigt. Zusätzlich können noch Metalldesaktivatoren zur Komplexierung von Schwermetallspuren, welche die Alterung katalytisch beschleunigen können, zugefügt werden. Beispiele für geeignete Metallfänger sind CAS 32687-78-8, 70331-94-1, 6629-10-3, Ethylendiamintetraessigsäure, N,N'-di-salicyliden-1,2-diaminopropan oder Handelprodukte wie 3-(N-salicylol)-amino-1,2,4-triazol (Palmarole ADK STAB CDA-1), N,N'-bis[3-(3',5'-di-tert-butyl-4'-hydroxyphenyl)propionyl]hydrazid (Palmarole MDA.P.10) oder 2,2'-oxamido-bis-[ethyl-3-(tert-butyl-4-hydroxyphenyl)propionat] (Palmarole MDA.P.11.).

Die Auswahl der genannten Alterungsschutzmittel hat besondere Bedeutung für das erfindungsgemäße Montageband, da mit phenolischen Antioxidantien allein oder selbst in Kombination mit schwefelhaltigen Costabilisatoren in der Regel keine optimalen Produkte erreicht werden können. Bei der Kalanderverarbeitung, bei der auf den Walzen ein relativ lang andauernder Zutritt von Luftsauerstoff unvermeidlich ist, ist die Mitverwendung von Phosphitstabilisatoren für eine ausreichende Wärmealterungsstabilität des Produktes sehr zu empfehlen. Selbst bei Extrusionsverarbeitung macht sich der Zusatz von Phosphiten bei der Alterungsprüfung des Produktes noch positiv bemerkbar. Für den Phosphitstabilisator wird eine Menge von mindestens 0,1 phr, vorzugsweise mindestens 0,3 phr bevorzugt.

Insbesondere bei der Verwendung von Füllstoffen können sich durch wanderungsfähige Metallverunreinigungen wie Eisen, Mangan, Chrom oder Kupfer Alterungsprobleme ergeben, die nur durch oben genannte Erkenntnisse der richtigen Kombination und Menge an Alterungsschutzmitteln sowie zusätzlich einem Metalldesaktivator vermieden werden.

Das erfindungsgemäße Montageband ist vorzugsweise pigmentiert, insbesondere schwarz, weiß oder gelb. Die Einfärbung kann in der Folienschicht beziehungsweise einer der Folienschichten, in der Klebstoff- oder einer sonstigen Schicht vorgenommen werden. Die Verwendung von organischen Pigmenten oder Farbstoffen in dem Montageband ist möglich, bevorzugt ist die Verwendung von Titandioxid. Der Anteil Titandioxid liegt vorzugsweise bei mindestens 5 phr. Die Einfärbung mit gecoatetem Titandioxid oder Russ trägt zur UV-Stabilisierung bei.

Die Handeinreißbarkeit eines Polyethylen-basierten Trägermaterials kann bei Bedarf durch eine Vernetzung weiter verbessert werden. Beispiele von Vernetzungsmethoden des Trägermaterials schließen Bestrahlung mit ionisierender Strahlung wie zum Beispiel Elektronenstrahlen, α-Strahlen, β-Strahlen und γ-Strahlen ein, weiterhin die Coextrusion von organischen Peroxiden mit dem Granulat-Gemisch und die anschließende Erwärmung bis zur Zersetzung des organischen Peroxids und ähnliche. Beide Methoden können auch kombiniert werden. Das Trägermaterial kann durch diese Methoden zwar vernetzt werden, allerdings ist die Handeinreißbarkeit durch die Rezeptur bereits ausreichend gut, so dass eine Vernetzung in der Regel nicht notwendig ist.

Das Montageband wird vorzugsweise einseitig oder beidseitig mit einer Haftklebstoffbeschichtung versehen. Die Menge der Klebstoffschicht beträgt jeweils 50 bis 300 g/m², vorzugsweise 150 bis 250 g/m² (gemeint ist die Menge nach einer eventuellen notwendigen Entfernung von Wasser oder Lösungsmittel; die Zahlenwerte entsprechen auch in etwa der Dicke in µm). In einem Fall mit Klebstoffbeschichtung beziehen sich die hier gemachten Angaben zur Dicke und zu dickenabhängigen mechanischen Eigenschaften ausschließlich auf die copolymerhaltigen Schicht des Montagebandes ohne Berücksichtung der Klebstoffschicht oder weiteren Schichten, die in Zusammenhang mit Klebstoffschichten vorteilhaft sind.

Die Klebkraft 90° auf Stahl beträgt insbesondere 10 bis 13 N/cm und/oder die Scherstandzeit mehr als 150 min bei 1 kg Belastung.

Als Haftklebemassen werden aufgrund der besonders guten Alterungsbeständigkeit Polyacrylate eingesetzt, bevorzugt in Wasser dispergierte Polyacrylate mit einem Feststoffgehalt bevorzugt zwischen 25 Gew.-% und 75 Gew.-%, besonders bevorzugt zwischen 50 Gew.-% und 70 Gew.-% oder ein Gemisch eines Polyacrylates mit einer alterungsstabilen Harzdispersion.

Weiterhin können bei Bedarf weitere Additive zur Anpassung der Produkteigenschaften zugesetzt werden wie zum Beispiel Klebharze, Weichharze, Kautschuke, Füllstoffe, Flammschutzmittel, Öle oder Emulgatoren. Mit diesen Additiven gelingt es beispielsweise, bei Verwendung der Haftklebemasse in einem Klebeband die klebtechnischen Eigenschaften in gewünschter Weise zu beeinflussen.

Zur Verbesserung des Alterungsverhaltens können übliche Alterungsschutzmittel zugesetzt werden, die aus dem Bereich der Elastomeren hinreichend bekannt sind.

Als Alterungsschutzmittel kommen sterisch gehinderte Phenole und Amine, Phosphite und organische Sulfide in Betracht, bevorzugt sterisch gehinderte Phenole, die zum Beispiel unter dem Handelsnamen Irganox ® bekannt sind, auch Alterungsschutzmittel, bei denen primäre und sekundäre Alterungsschutzmittelfunktionen in einem Molekül vereint sind.

Als Alterungsschutzmittel in Form von Antioxidantien können N,N-di-2-naphthyl-p-phenylenediamin, 2,5-di-(t-amyl)hydroquinon, Trimethyldihydroquinolinpolymer und 6-ethoxy-2,2,4-trimethyl-1,2-dihydroquinolin, 2,6-di-t-butyl-p-cresol, 2,2'-methylene-bis(4-methyl-6-t-butylphenol), 4,4'-butylidene-bis(3-methyl-6-t-butylphenol), 4,4'-thio-bis(3-methyl-6-t-butylphenol), stearyl-beta-(3,5-di-t-butyl-4-hydroxyphenyl)propionat, tetrakis[methylene-3-(3',5'-di-t-butyl-4'-hydroxyphenyl)propionate]methan, 1,3,5-trimethyl-2,4,6-tris(3,5-di-t-butyl-4-hydroxybenzyl)benzen und 1,1,3-tris(2-methyl-4-hydroxy-5-t-butylphenol)butan, Dilaurylthiodipropionat, Distearylthiodipropionat, Laurylstearylthiodipropionat and Dimyristylthiodipropionat, Triisodecylphosphit, Diphenylisodecylphosphit, Triphenylphosphit und Trinonylphosphit sowie N-salicyloyl-N'-aldehydehydrazin, N-salicyloyl-N'-acetylhydrazin, N,N'-diphenyloxamid und N,N'-di-(2-hydroxyphenyl)oxamid Verwendung finden.

Es können auch thermisch vernetzende Polyacrylat-Heißschmelz-Haftklebemassen wie in der EP 1 978 069 A1 beschrieben verwendet werden.

Als Polyacrylat-Heißschmelz-Haftklebemasse wird bevorzugt ein Polyacrylat eingesetzt, das auf die folgende Monomerzusammensetzung zurückgeführt werden kann:
a) Acrylsäureester und/oder Methacrylsäureester der folgenden Formel
   CH₂ = C(R^{I})(COOR^{II})
   wobei R^{I} = H oder CH₃ und R" ein Alkylrest mit 4 bis 14 C-Atomen ist,
b) olefinisch ungesättigte Monomere mit funktionellen Gruppen, die eine Reaktivität mit den als Vernetzer genutzten Epoxidgruppen aufweisen,
c) optional weitere Acrylate und/oder Methacrylate und/oder olefinisch ungesättigte Monomere, die mit der Komponente (a) copolymerisierbar sind.

Zur Anwendung des Polyacrylats als Haftkleber sind die Anteile der entsprechenden Komponenten (a), (b), und (c) derart gewählt, dass das Polymerisationsprodukt insbesondere eine Glastemperatur ≤ 15 °C (DMA bei geringen Frequenzen) aufweist.

Es ist zur Herstellung von Polyacrylat-Heißschmelz-Haftklebemassen sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Die Monomere der Komponente (a) sind insbesondere weichmachende und/oder unpolare Monomere.

Vorzugsweise werden für die Monomere (a) Acrylmonomere eingesetzt, die Acryl- und Methacrylsäureester mit Alkylgruppen, bestehend aus 4 bis 14 C-Atomen, bevorzugt 4 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie zum Beispiel 2-Ethylhexylacrylat, 2-Ethylhexylmethacrylat.

Die Monomere der Komponente (b) sind insbesondere olefinische ungesättigter Monomere (b) mit funktionellen Gruppen, insbesondere mit funktionellen Gruppen, die eine Reaktion mit den Epoxidgruppen eingehen können.

Bevorzugt werden für die Komponente (b) Monomere mit solchen funktionellen Gruppen eingesetzt, die aus der folgenden Aufzählung ausgewählt sind: Hydroxy-, Carboxy-, Sulfonsäure-, oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itaconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können im Sinne der Komponente (c) alle vinylisch-funktionalisierten Verbindungen eingesetzt werden, die mit der Komponente (a) und/oder der Komponente (b) copolymerisierbar sind, und können auch zur Einstellung der Eigenschaften der resultierenden Haftklebemasse dienen.

Beispielhaft genannte Monomere für die Komponente (c) sind:
Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat,

Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, a- und p-Methylstyrol, a-Butylstyrol, 4-n-Butylstyrol, 4-n-Decylstyrol, 3,4-Dimethoxystyrol. Makromonomere wie 2-Polystyrolethylmethacrylat (Molekulargewicht M_{w} von 4000 bis 13000 g/mol), Poly(Methylmethacrylat)ethylmethacrylat (M_{w} von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen sind, zum Beispiel Tetrahydrofurfurylacrylat, N-tert-Butylacrylamid, Allylacrylat wobei diese Aufzählung nicht abschließend ist.

Als Vernetzer der Polyacrylat-Heißschmelz-Haftklebemassen werden epoxidgruppenhaltige Substanzen und insbesondere multifunktionelle Epoxide eingesetzt, also solche, die mindestens zwei Epoxideinheiten pro Molekül aufweisen (also mindestens bifunktional sind). Dies können sowohl aromatische als auch aliphatische Verbindungen sein. Als Beschleuniger der Vernetzungsreaktion wirken Amine.

Das Vernetzer-Beschleuniger-System ist so gewählt, dass die Vernetzungsreaktion bei einer Temperatur unterhalb der Schmelztemperatur der Polyacrylatmasse, insbesondere bei Raumtemperatur, voranschreitet. Die Vernetzungsmöglichkeit bei Raumtemperatur bietet dabei den Vorteil, dass keine zusätzliche Energie zugeführt werden muss und daher eine Kostenersparnis verbucht werden kann.

Die Bezeichnung "Vernetzung bei Raumtemperatur" bezieht sich dabei insbesondere auf die Vernetzung bei üblichen Lagertemperaturen von Klebebändern, viskoelastischen nichtklebrigen Materialien oder dergleichen und soll in sofern nicht auf 20 °C beschränkt sein. Selbstverständlich ist es erfindungsgemäß auch vorteilhaft, wenn die Lagertemperatur aufgrund witterungsbedingter oder sonstiger Temperaturschwankungen von 20 °C abweicht - oder die Raumtemperatur aufgrund lokaler Gegebenheiten von 20 °C differiert - und die Vernetzung - insbesondere ohne weitere Energiezufuhr - fortschreitet.

Als epoxidgruppenhaltige Substanzen werden in Polyacrylat-Heißschmelz-Haftklebemassen insbesondere multifunktionelle Epoxide eingesetzt, also solche, die mindestens zwei Epoxideinheiten pro Molekül aufweisen (also mindestens bifunktional sind). Dies können sowohl aromatische als auch aliphatische Verbindungen sein.

Hervorragend geeignete multifunktionelle Epoxide sind Oligomere des Epichlorhydrins, Epoxyether mehrwertiger Alkohole [insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche], Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanillin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureestern ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon beziehungsweise deren Derivaten und anderen) erhältlich sind.

Sehr geeignete Ether sind beispielsweise 1,4-Butandioldiglycidether, Polyglycerol-3-Glycidether, Cyclohexan-dimethanoldiglycidether, Glycerintriglycidether, Neopentylglykoldiglycidether, Pentaerythrittetraglycidether, 1,6-Hexandioldiglycidether), Polypropylenglykoldiglycidether, Trimethylolpropantriglycidether, Bisphenol-A-Diglycidether und/oder Bisphenol-F-Diglycidether.

Als Beschleuniger in Polyacrylat-Heißschmelz-Haftklebemassen werden besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine, die mit den Bausteinen der Polyacrylate keine oder nur geringfüge Reaktionen eingehen.

Prinzipiell können als Beschleuniger sowohl primäre (NRH₂), sekundäre (NR₂H) als auch tertiäre Amine (NR₃) gewählt werden, selbstverständlich auch solche, die mehrere primäre und/oder sekundäre und/oder tertiäre Amingruppen aufweisen. Besonders bevorzugte Beschleuniger sind aber- insbesondere in Verbindung mit den vorgenannten Gründen - tertiäre Amine, wie beispielweise Triethylamin, Triethylendiamin, Benzyldimethylamin, Dimethylamino-methylphenol, 2,4,6-Tris-(N,N-dimethylaminomethyl)-phenol, N,N'-Bis(3-(dimethyl-amino)propyl)harnstoff.

Als Beschleuniger werden können vorteilhaft auch multifunktionelle Amine wie Diamine, Triamine und/oder Tetramine eingesetzt.

Hervorragend geeignet sind zum Beispiel Diethylentriamin, Triethylentetramin, Trimethylhexamethylendiamin,

Weiterhin hervorragend geeignete Beschleuniger sind Pyridin, Imidazole (wie beispielsweise 2-Methylimidazol), 1,8-Diazabicyclo(5.4.0)undec-7-en. Auch cycloaliphatische Polyamine können hervorragend als Beschleuniger eingesetzt werden.

Geeignet sind auch Beschleuniger auf Phosphatbasis wie Phosphine und/oder Phosphoniumverbindungen, wie beispielsweise Triphenylphosphin oder Tetraphenylphosphonium-tetraphenylborat.

Der Vorteil des Einsatzes von thermisch vernetzenden Polyacrylat-Heißschmelz-Haftklebemassen ist insbesondere bei hohen Masseaufträgen, dass ein langwieriger und schwieriger Trocknungsprozess entfällt, da die Klebemassen bereits beim Auftrag auf das Trägermaterial kein Lösungsmittel mehr enthalten. Die thermische Vernetzung wird durch die Extrusionstemperatur der Polyacrylat-Heißschmelz-Haftklebemasse initialisiert, so dass auch für die Vernetzung keine nachträgliche Wärmebehandlung erforderlich ist.

Unabhängig von der Art der Klebemasse ist die Verwendung einer Primerschicht zwischen Trägermaterial und Klebmasse zur Verbesserung der Haftung der Klebmasse auf dem Trägermaterial und somit der Vermeidung der Übertragung von Klebstoff auf die Folienrückseite während des Abwickelns der Rollen vorteilhaft.

Als Primer sind die bekannten Dispersion- und Lösungsmittelsysteme verwendbar, zum Beispiel auf Basis von isopren- oder butadienhaltigen Kautschuken und/oder Cyclokautschuken. Isocyanate oder Epoxyharze als Additive verbessern die Haftung und erhöhen zum Teil auch die Scherfestigkeit des Haftklebstoffes. Physikalische Oberflächenbehandlungen wie Beflammung, Corona oder Plasma oder Coextrusionsschichten sind ebenfalls geeignet, die Haftung zu verbessern.

Beschreibungen der üblichen Klebmassen sowie Rückseitenbeschichtungen und Primer finden sich zum Beispiel in "Handbook of Pressure Sensitive Adhesive Technology", D. Satas, (3. Auflage).

Für die Verwendung als Montageband kann die mit Klebemasse beschichtete Seite des Montagebands mit einer Trennfolie oder einem Trennpapier abgedeckt sein. In einer bevorzugten Ausführungsform werden silikonisierte oder fluorierte Folien oder Papiere wie zum Beispiel Glassine, HDPE oder LDPE gecoatete Papiere eingesetzt, die wiederum mit einer Releaseschicht basierend auf Silikonen oder fluorierten Polymeren versehen sind. In einer besonders bevorzugten Ausführungsform werden als Abdeckung Trennpapiere eingesetzt.

Das erfindungsgemäße Montageband wird für den Fall einer Klebstoffbeschichtung vorzugsweise vorher mindestens 3 Tage, besonders bevorzugt mindestens 7 Tage vor der Beschichtung gelagert, um eine Nachkristallisation zu erreichen, damit die Rollen keine Neigung zum Teleskopieren erhalten (wahrscheinlich weil die Folie beim Kristallisieren schrumpft). Vorzugsweise wird die Folie an der Beschichtungsanlage über geheizte Walzen zur Egalisierung (Verbesserung der Planlage) geführt.

Folien aus polyolefinhaltigem Material lassen sich üblicherweise nicht von Hand ein- oder abreißen. Sie lassen sich als teilkristalline Werkstoffe leicht verstrecken und weisen daher eine hohe Bruchdehnung auf, in der Regel liegt diese erheblich über 350 %.

Beim Versuch, solche Folien zu reißen, tritt anstelle eines sauberen Risses eine Verdehnung der Folie ein. Selbst hohe Kräfte können nicht unbedingt die typisch hohen Bruchkräfte überwinden. Selbst wenn das Einreißen gelingt, wird kein gut aussehender und verklebbarer Abriss erzeugt, da an beiden Enden der getrennten Folie ein dünnes schmales Schwänzchen entsteht. Dieses Problem lässt sich auch durch Additivierung nicht beheben, auch wenn Füllstoffe in hohen Mengen die Bruchdehnung reduzieren. Verstreckt man Polyolefinfolien biaxial, wird die Bruchdehnung um mehr als 50 % reduziert, was die Reißbarkeit begünstigt. Der Versuch, dieses Verfahren auf weiche Montagebänder zu übertragen, scheitert jedoch, da die Kristallinität solcher Folien deutlich zunimmt und die Kraft-Dehnungs-Kurve erheblich steiler wird. Dies hat zur Folge, dass sich die Flexibilität und Anschmiegsamkeit des Montagebandes drastisch verschlechtert. Das erfindungsgemäße Montageband weist jedoch ein sehr gutes Verhalten beim Abreißen in Längsrichtung oder Einreißen in Querrichtung bei gleichzeitig hoher Flexibilität auf. Zusätzlich kann das Reißverhalten durch das Schneidverfahren beim Konfektionieren der Rollen optimiert werden. Bei Herstellung der Montagebandrollen können raue Schnittkanten erzeugt werden, die bei mikroskopischer Betrachtung Risse in der Folie ausbilden, die dann offenbar ein Weiterreißen begünstigen. Dies ist insbesondere durch die Anwendung eines Quetschschnitts mit stumpfen oder definiert gezackten rotierenden Messern auf Ballenware (Jumbos, Rollen in großer Länge) oder durch einen Abstechschnitt mit feststehenden Klingen oder rotierenden Messern von Stangenware (Rollen in Produktionsbreite und verkaufsüblicher Länge) möglich. Die Bruchdehnung kann durch einen geeigneten Schliff der Klingen und Messer eingestellt werden. Bevorzugt ist die Ausführung der Herstellung von Stangenware mit Abstechschnitt mit feststehenden Klingen. Durch starkes Abkühlen der Stangen vor dem Schneiden kann die Rissbildung beim Schneidprozess noch verbessert werden. In der bevorzugten Ausführungsform ist die Bruchdehnung des speziell geschnittenen Montagebandes um mindestens 30 % niedriger als beim Schnitt mit scharfen Klingen. In der besonders bevorzugten Ausführungsform des Montagebandes, deren Seitenkanten beim Schneiden definiert beschädigt werden, liegt die Bruchdehnung zwischen 100 und 200 %.

Das Schneiden von konventionellen Klebebändern mit Gewebe-, Vlies- und Folienträger (zum Beispiel PVC) erfolgt durch Scherenschnitt (zwischen zwei rotierenden Messern), Abstechschnitt (feststehende oder rotierender Messer werden in eine rotierende Stange des Produktes gedrückt), Klingenschnitt (die Bahn wird bei Durchlauf durch scharfe Klingen geteilt) oder Quetschschnitt (zwischen einem rotierenden Messer und einer Walze).

Mit dem insbesondere einseitig klebenden Montageband können die Bahnen (Folien) von Dampfbremsen durch einfaches Überkleben einfach und schnell luftdicht, wasserdicht, luftundurchlässig, aber beschränkt diffusionsfähig (dampfdurchlässig) verbunden werden. Das Montageband lässt sich leicht von Hand, ohne jeglichen Einsatz von Werkzeugen, wie zum Beispiel Scheren und Messer abreißen, womit der Umgang mit dem Montageband im Vergleich zu Montagebändern des Standes der Technik wesentlich vereinfacht und beschleunigt wird. Außerdem lassen sich für schwer zugängliche Orte beliebig kleine Bandabschnitte ablängen.

Zu den im Fokus stehenden Untergründen zählen alle, wie sie im Dachausbau anzutreffen sind, beispielsweise gesägtes und mehr oder weniger gehobeltes Holz (Dachlatten und Dachsparren), Betonflächen (beispielsweise um den Schornstein) oder Ziegel- oder Metalloberflächen. Das Montageband kann auch auf Folien sehr gut verklebt werden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Das Klebeband kann in festen Längen wie zum Beispiel als Meterware oder aber als Endlosware auf Rollen (archimedische Spirale) zur Verfügung gestellt werden.

### Prüfmethoden

Die Messungen werden bei einem Prüfklima von 23 ± 1 °C und 50 ± 5 % rel. Luftfeuchte durchgeführt.

Die Dichte der Polymeren wird nach ISO 1183, der Biegemodul nach ISO 178 ermittelt und in g/cm³ beziehungsweise MPa ausgedrückt. Der Biegemodul nach ASTM D790 beruht auf anderen Abmessungen der Probekörper, ist aber im Ergebnis als Zahl vergleichbar. Der Schmelzindex wird nach ISO 1133 geprüft und in g/10 min ausgedrückt. Die Prüfbedingungen sind wie marktüblich 230 °C und 2,16 kg für Polymere mit kristallinem Polypropylen und 190 °C und 2,16 kg für Polymere mit kristallinem Polyethylen. Der Kristallitschmelzpunkt (T_{cr}) wird mit DSC nach MTM 15902 (Basell-Methode) beziehungsweise ISO 3146 ermittelt.

Das Zugdehnungsverhalten des Montagebandes wird an Prüflingen vom Typ 2 (rechteckige 150 mm lange und nach Möglichkeit 15 mm breite Prüfstreifen) nach DIN EN ISO 527-3/2/300 mit einer Prüfgeschwindigkeit von 300 mm/min, einer Einspannlänge von 100 mm und einer Vorkraft von 0,3 N/cm ermittelt. Im Fall von Mustern mit rauen Schnittkanten sind die Kanten mit einer scharfen Klinge vor dem Zugversuch zu besäumen. Die Kraft wird in N/Streifenbreite ausgedrückt, die Bruchdehnung in %. Die Prüfergebnisse, insbesondere die Bruchdehnung (Reißdehnung), sind durch eine hinreichende Zahl von Messungen statistisch abzusichern.

Zur Bestimmung der Klebkraft auf Stahl werden die Muster auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach fünf Minuten an der Luft liegen gelassen, damit das Lösungsmittel abdampfen kann. Danach erfolgt das Anrollen des Prüfmusters auf den Stahluntergrund. Hierzu wird das Klebeband mit einer 2 kg Rolle fünfmal hin und her, bei einer Aufrollgeschwindigkeit von 10 m/min, überrollt. Unmittelbar nach dem Anrollen wird die Stahlplatte in eine spezielle Halterung geschoben, die es ermöglicht, das Muster in einem Winkel von 90° senkrecht nach oben abzuziehen. Die Klebkraftmessung erfolgt mit einer Zwick-Zugprüfmaschine. Die Messergebnisse sind in N/cm angegeben und sind gemittelt aus drei Messungen.

Klebkräfte auf Polyethylen werden an 20 mm breiten Verklebungen einer 190 µm dicken Polyethylen-Folie und des Klebebands ohne vorherige Lagerung ermittelt. Die Folie ist dabei senkrecht nach unten befestigt, das Klebeband wird senkrecht nach oben mit einer Geschwindigkeit von 300 mm/min abgezogen. Für Klebebänder mit weichen Trägerfolien oder doppelseitigen Klebebändern gilt das gleiche Vorgehen wie bei der Bestimmung der Klebkraft auf Stahl.

Die Dicke der Folienschicht des Montagebandes wird nach DIN 53370 bestimmt (die Haftklebstoffschicht wird nicht berücksichtigt).

Die Musterpräparation für die Bestimmung der Scherstandzeit erfolgt im angegeben Prüfklima. Das Prüfmuster wird auf 13 mm zugeschnitten und auf eine Stahlplatte geklebt. Die Verklebungsfläche beträgt 20 mm x 13 mm (Länge x Breite). Vor der Messung wird die Stahlplatte gereinigt und konditioniert. Dazu wird die Platte zunächst mit Aceton abgewischt und danach fünf Minuten an der Luft liegen gelassen, damit das Lösungsmittel abdampfen kann. Nach dem Verkleben wird die offene Seite mit einer 50 µm Aluminiumfolie verstärkt und mit einer 2 kg Rolle zweimal hin und her überrollt. Anschließend wird eine Gurtschlaufe am überstehenden Ende des Dreischichtverbundes angebracht. Das Ganze wird dann an einer geeigneten Vorrichtung aufgehängt und mit 10 N belastet. Die Aufhängvorrichtung ist so beschaffen, dass das Gewicht die Probe in einem Winkel von 179 °+/- 1° belastet. Dadurch ist sichergestellt, dass sich der Dreischichtverbund nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 µm Aluminiumfolie verstärkt, das Trennmaterial entfernt und auf die Prüfplatte analog der Beschreibung geklebt.

Der Einreißfestigkeit wird wie in ASTM D1004 beschrieben ermittelt. Die Geometrie der Probe stellt das Einreißen an der dafür vorgesehenen Stelle sicher. Bei einer Prüfgeschwindigkeit von 51 mm/min wird die für das erste Einreißen nötige Kraft bestimmt. Als Ergebnis wird das Kraftmaximum angegeben.

Der Weiterreißwiderstand - auch Weiterreißfestigkeit genannt [- nach DIN 53363 ist die Kraft, die eine trapezförmige Probe mit Einschnitt dem Weiterreißen entgegensetzt. Die Prüfgeschwindigkeit beträgt 100 mm/min. Um den direkten Vergleich der Proben zu ermöglichen, wird das Kraftmaximum angegeben, nicht, wie in der DIN 53363 vorgegeben, das Kraftmaximum geteilt durch die Probendicke.

Zur Bestimmung der Alterungsbeständigkeit werden Verklebungen des Klebebands auf handelsüblichen Winddichtungen, Dampfbremsen oder Dampfsperren geprüft. Verwendet werden Prüflinge wie in der Methode zur Bestimmung der Klebkraft auf Polyethylen beschrieben. Die Lagerung erfolgt für 20 Wochen bei 65 ± 1 °C und 85 ± 5 % rel. Luftfeuchte. Im Anschluss an die Lagerung wird die Klebkraft wie in der oben beschriebenen Methode zur Bestimmung der Klebkraft auf Polyethylen bestimmt. Ein Abfall der Klebkraft nach Lagerung im Vergleich zur Klebkraft auf Polyethylen vor der Lagerung wird als Ergebnis angegeben sollte nicht mehr als 10 % betragen.

Das gewichtsmittlere Molekulargewicht M_{w} oder das zahlenmittlere Molekulargewicht Mₙ werden mittels Gelpermeations-chromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 10 µ, ID 8,0 mm x 50 mm verwendet. Zur Auftrennung wird die Säule PSS-SDV, 10 µ, linear 1 eingesetzt. Die Probenkonzentration beträgt 4 g/l, die Durchflussmenge 1,0 ml pro Minute. Es wird gegen Polystyrol Standards gemessen. (µ = µm; 1 Å = 10⁻¹⁰ m).

Der K-Wert ist ein Maß für die durchschnittliche Molekülgröße hochpolymerer Stoffe. Zur Messung werden einprozentige (1 g/100 ml) toluolische Polymerlösungen hergestellt und mit Hilfe eines VOGEL-OSSAG-Viskosimeters deren kinematischen Viskositäten bestimmt. Nach Normierung auf die Viskosität des Toluols wird die relative Viskosität erhalten, aus der sich nach FIKENTSCHER der K-Wert errechnen lässt (Polymer 8/1967, 10 381ff).

Folgende Beispiele sollen die Erfindung erläutern, ohne deren Umfang zu beschränken.

| Folienrohstoffe der Beispiele: | |
|---|---|
| Dertophene® T110, DRT | Klebharz auf Terpen-Phenolbasis |
| | (Erweichungspunkt 110 °C, Hydroxylwert 45-60), |
| | CAS-Nr. 73597-48-5 |
| Epikure® 3234, Hexion Specialty Chemicals | |
| | Triethylentetramin, CAS-Nr. 112-24-3 |
| Escorene Ultra UL 02133EN2, ExxonMobil Chemical | |
| | EVA, Schmelzindex 21 g/10min, Dichte 0,956 g/cm³, |
| | Kristallitschmelzpunkt 59 °C, VA-Gehalt 33 Gew.-% |
| HMA 035, ExxonMobil Chemical | HDPE, Schmelzindex 8,0 g/10min, Dichte 0,964 |
| | g/cm³, Kristallitschmelzpunkt 134 °C |
| LCC 70, Schulman | Mattierungsmittelbatch, Mineral-gefülltes Batch auf |
| | PE-Basis, Schmelzindex 11 g/10 min, |
| | Dichte 1,71 g/cm³ |
| LD 166 BA, ExxonMobil Chemical | LDPE, Schmelzindex 0,2 g/10min, Dichte 0,923 |
| | g/cm³, Kristallitschmelzpunkt 110 °C |
| LD251, ExxonMobil Chemical | LDPE, Schmelzindex 8 g/10min, Dichte 0,9155 |
| | g/cm³, Kristallitschmelzpunkt 104 °C |
| LD261, ExxonMobil Chemical | EVA, Schmelzindex 7,5 g/10min, Dichte 0,925 g/cm³, |
| | Kristallitschmelzpunkt 102 °C, |
| | VA-Gehalt 4,5 Gew.-% |
| LD 360JD, ExxonMobil Chemical | EVA, Schmelzindex 1,5 g/10min, Dichte 0,924 g/cm³, |
| | Kristallitschmelzpunkt 106 °C, |
| | VA-Gehalt 2,1 Gew.-% |
| Novex M21 E760, Ineos | Zn-lonomer, LDPE, Schmelzindex 0,5 g/10min, |
| | Dichte 0,933 g/cm³, Kristallitschmelzpunkt 107 °C |
| Novex M21G764, Ineos | Zn-lonomer, LDPE, Schmelzindex 0,95 g/10min, |
| | Dichte 0,926 g/cm³, |
| | Vicat-Erweichungstemperatur nach ISO 306 A 97 °C |
| Polypox® R16, UPPC AG | Pentaerythrittetraglycidether, CAS-Nr. 3126-63-4 |
| Reofos 65; Firma GREAT LAKES, USA | |
| | Isopropyliertes Triarylphosphat, CAS-Nr. 68937-41-7 |
| Surlyn 1601-2, DuPont | Natrium-lonomer, Schmelzindex 1,3 g/10min, Dichte |
| | 0,94 g/cm³, Kristallitschmelzpunkt 98 °C |
| Surlyn 7930, DuPont | Lithium-lonomer, Schmelzindex 1,8 g/10min, Dichte |
| | 0,94 g/cm³, Kristallitschmelzpunkt 89 °C |
| TPM1005E4 WHITE, Techmer PM | Titandioxid-Masterbatch, 50 Gew.-% TiO₂ in PE |
| TS8001, Polyplast Müller | 10 Gew.-% Irganox 1010 in LDPE |
| TS8002, Polyplast Müller | 5 Gew.-% Irganox 1010 und 5 Gew.-% Irgafos 168 in |
| | LDPE |
| CPUV130PO, Schulman | 10 Gew.-% Tinuvin 111 |

### Beispiel 1

### Herstellung des Trägermaterials:

Auf einer Blasfolienanlage wird das Trägermaterial mit folgendem Rezepturaufbau hergestellt:
Schicht 1, 18 µm:
   24 Gew.-% LD 251 (LDPE von Exxonmobil, Schmelzindex 8 g/10min, Dichte 0,9155 g/cm³, Biegemodul 180 MPa, Kristallitschmelzpunkt 104 °C)
   70 Gew.-% Novex M21E760 (PE-lonomer mit Zn-lonen von Ineos, Dichte 0,933 g/cm³, Schmelzindex 0,5 g/10min, Kristallitschmelzpunkt 107 °C, Biegemodul 200 MPa) und
   3 Gew.-% TS 8002
   3 Gew.-% Lichtschutzmittel wie CPUV130PO
Schicht 2, 34 µm:
   89 Gew.-% LD 251
   3 Gew.-% TS 8002
   3 Gew.-% Lichtschutzmittel wie CPUV130PO
   5 Gew.-% Weißbatch (TPM1005E4 WHITE)
Schicht 3, 18 µm:
   wie Schicht 1

Das Trägermaterial wird beidseitig Corona-behandelt.

### Herstellung des Polyacrylat-Heißschmelz-Haftklebers:

Im Folgenden wird die Präparation des Ausgangspolymers beschrieben. Das untersuchte Polymer wird konventionell über eine freie radikalische Polymerisation in Lösung hergestellt.

Basispolymer P:
Ein für radikalische Polymerisationen konventioneller Reaktor wird mit 45 kg 2-Ethylhexylacrylat, 45 kg n-Butylacrylat, 5 kg Methylacrylat, 5 kg Acrylsäure und 66 kg Aceton/Isopropanol (92,5:7,5) befüllt. Nach 45minütiger Durchleitung von Stickstoffgas unter Rühren wird der Reaktor auf 58 °C hochgeheizt und 50 g AIBN hinzugegeben.

Anschließend wird das äußere Heizbad auf 75 °C erwärmt und die Reaktion konstant bei dieser Außentemperatur durchgeführt. Nach 1 h werden erneut 50 g AIBN zugegeben, und nach 4 h wird mit 20 kg Aceton/Isopropanol Gemisch verdünnt.

Nach 5 h sowie nach 7 h wird jeweils mit 150 g Bis-(4-tert-butylcyclohexyl)-peroxydicarbonat nachinitiiert. Nach 22 h Reaktionszeit wird die Polymerisation abgebrochen und auf Raumtemperatur abgekühlt. Das Polyacrylat hat einen Umsatz von 99,6 %, einen K-Wert von 59, einen Feststoffgehalt von 54 %, ein mittleres Molekulargewicht von M_{w} = 557.000 g/mol, Polydispersität PD (M_{w}/Mₙ) = 7,6.

Das Acrylatcopolymer (Basispolymer P) wird mittels Einschneckenextruder (Aufkonzentrationsextruder, Berstorff GmbH, Deutschland) weitestgehend vom Lösemittel befreit (Restlösemittelgehalt ≤ 0,3 Gew.-%). Die Drehzahl der Schnecke beträgt 150 U/min, der Motorstrom 15 A. Es wird ein Durchsatz von 58,0 kg flüssig/h realisiert. Zur Aufkonzentration wird an drei verschiedenen Domen ein Vakuum angelegt. Die Unterdrücke betragen jeweils zwischen 20 mbar und 300 mbar. Die Austrittstemperatur des aufkonzentrierten Hotmelts liegt bei ca. 115 °C. Der Feststoffgehalt beträgt nach diesem Aufkonzentrationsschritt 99,8 %.

Der nach dem oben erläuterten Verfahren hergestellte Acrylatschmelzhaftkleber wird direkt in einen nachgeschalteten WELDING-Doppelschneckenextruder (WELDING Engineers, Orlando, USA; Model 30 MM DWD; Schneckendurchmesser 30 mm, Länge Schnecke 1 = 1258 mm; Länge Schnecke 2 = 1081 mm; 3 Zonen) gefördert. Über ein Feststoffdosiersystem wird das Harz Dertophene® T110 in Zone 1 zudosiert und homogen eingemischt. Die Drehzahl beträgt 451 U/min, der Motorstrom 42 A. Es wird ein Durchsatz von 30,1 kg/h realisiert. Die Temperaturen der Zonen 1 und 2 betragen jeweils 105 °C, die Schmelzetemperatur in Zone 1 betrug 117 °C und die Massetemperatur bei Austritt (Zone 3) bei 100 °C.

Der so hergestellte Acrylatschmelzhaftkleber wird in einem Fütterextruder (Einschneckenförderextruder der Firma TROESTER GmbH & Co KG, Deutschland) aufgeschmolzen und mit diesem als Polymerschmelze in einen Doppelschneckenextruder gefördert (Firma LEISTRITZ, Deutschland, Bez. LSM 30/34). Das Aggregat wird von außen elektrisch beheizt und über verschiedene Gebläse luftgekühlt und ist so konzipiert, dass bei guter Verteilung des Vernetzer-Beschleuniger-Systems in der Polymermatrix gleichzeitig eine kurze Verweilzeit der Klebmasse im Extruder gewährleistet ist. Dazu werden die Mischwellen des Doppelschneckenextruders so angeordnet, dass sich fördernde und mischende Elemente abwechseln. Die harzmodifizierte Acrylat-Hotmeltmasse wird so kontinuierlich mit dem Vernetzer-Beschleuniger-System bestehend aus einem
- Pentaerthrittetraglycidether,
   hier olypox® R16 der Firma UPPC AG, Deutschland (Epoxid) und einem
- Triethylentetramin,

hier Epikure® 925 der Firma HEXION, Deutschland (Aminbeschleuniger) compoundiert.

Im Doppelschneckenextruder wird ein Gesamtmassestrom bestehend aus 70 Gew.-Teilen Polymer P und 30 Gew.-Teilen Harz Dertophene® T110 von 533,3 g/min (das entspricht 373 Gramm des reinen Polymers pro Minute) mit 0,525 g/min des Epoxidvernetzers Pentaerythrittetraglycidether (entspricht 0,14 Gew.-% auf Polymer) und 0,45 g/min des Aminbeschleunigers Triethylentetramin (entspricht 0,12 Gew.-% auf Polymer) abgemischt. Die Dosierung des Amins und des Epoxids erfolgt separat über zwei Schlauchpumpen. Zur Verbesserung der Dosierfähigkeit und der erreichbaren Mischgüte wird das verwendete Vernetzersystem mit dem flüssigen Phosphatester (Reofos 65) verdünnt (Verhältnis zum Vernetzer 0,5:1).

Die Verarbeitungszeit des fertigen Compounds ist größer 7 min bei einer durchschnittlichen Massetemperatur von 125 °C nach dem Verlassen des LEISTRITZ-Doppelschneckenextruders (Austritt: Runddüse, 5 mm Durchmesser). Die Beschichtung erfolgt an einem 2-Walzenauftragswerk bei Walzenoberflächentemperaturen von jeweils 100 °C und einem Masseauftrag von 200 g/m² auf Trennpapier. Die Zeit zwischen Zudosierung des Vernetzer-Beschleuniger-Systems bis zum Ausformen beziehungsweise Beschichten wird als Verarbeitungszeit bezeichnet. Die Verarbeitungszeit gibt den Zeitraum an, in welcher die mit dem Vernetzer-Beschleuniger-System abgemischte Klebmasse mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze des 2-Walzenauftragswerks wird nicht angetrieben.

### Herstellung des Montagebands:

Das Klebeband wird schließlich durch beidseitiges Kaschieren des beschichteten Trennpapiers mit dem Corona-vorbehandelten Trägermaterial erhalten. Eines der beiden Trennpapiere wird nach dem Kaschieren wieder ausgedeckt, das andere verbleibt im Produkt. Das Klebeband wird zu Stangen mit 25 m Lauflänge gewickelt. Das Schneiden erfolgt durch Abstechen der erhaltenen Stangen mittels rotierender Messer (round blade) in Rollen zu 15 mm Breite.

Von dem so hergestellten Montageband wurden die Klebkraft auf Stahl und PE gemessen. Mit diesem Beispiel wird gezeigt, dass sehr leistungsfähige Klebebänder hergestellt werden können, die sich unter anderem durch gute Klebkräfte auf polaren und unpolaren Substraten und gute kohäsive Eigenschaften auszeichnen. Nach Alterung ergibt sich ein Abfall der Klebkraft von nur 5 % im Vergleich zum Frischwert. Das Montageband ist außerdem sehr leicht handeinreißbar, wie der niedrige Wert der Einreißfestigkeit in Tabelle 1 zeigt.

### Beispiel 2

Auf einer Blasfolienanlage wird eine Folie hergestellt. Die Außenschichten bestehen aus

| | |
|---|---|
| 74 Gew.-% | LDPE (LD 166 BA), |
| 20 Gew.-% | HDPE (HMA 035), |
| 3 Gew.-% | TS 8002 |
| 3 Gew.-% | Lichtschutzmittel wie CPUV130PO |

und die Mittelschicht aus

| | |
|---|---|
| 94 Gew.-% | Ethylencopolymer mit Na-Ionen (Surlyn 1601-2) und |
| 3 Gew.-% | TS 8002 |
| 3 Gew.-% | Lichtschutzmittel wie CPUV130PO. |

Verfahrensbedingungen:
Extrudertemperatur 175 °C
Düsentemperatur 180 °C
Aufblasverhältnis 2,6
Längsstreckverhältnis 5,8
Höhe der Frostlinie 60 cm
Dicke der Außenschichten jeweils 40 µm
Dicke der Mittelschicht 35 µm

Die so hergestellte Trägerfolie wird anschließend einer einseitigen Flammvorbehandlung unterzogen.

### Herstellung der Haftklebemasse und Beschichtung:

Polytex WP 5000 (A.V.Chemie), eine Dispersion eines carboxylhaltigen Copolymers auf Basis Acrylsäureestern mit einem Feststoffgehalt von 65 Gew.-%, wird mit 0,3 Gew.-% (bezogen auf Feststoffgehalt) Latekoll D der Firma BASF, eine anionische carboxlgruppenhaltige Acrylsäureester-Copolymer-Dispersion mit einem Feststoffgehalt von 25 Gew.-%, gemischt. Der so erhaltene Compound wird mit Ammoniak leicht alkalisch eingestellt, so dass die verdickenden Eigenschaften von Latekoll D wirksam werden.

Die so erhaltene Dispersionshaftklebemasse wird mit einem Streichmesser mit einem Spalt von 38 µm auf ein 70 µm dickes silikonisiertes Trennpapier mit einer Schichtdicke von 150 g/m² (trocken) beschichtet. Das beschichtete Material wird in einen Vortrockenkanal eingefahren und mittels einer Infrarotquelle vorgetrocknet. Anschließend erfolgt die Haupttrocknung in einem Kanaltrockner mit unterschiedlichen Trockenzonen.

In einem Folgeschritt wird die beschriebene flammvorbehandelte coextrudierte Polyethylenfolie aufkaschiert. Das kaschierte Material wird zur Rolle aufgewickelt.
Technische Bedingungen:
   Maschine: Produktionsbeschichtungsanlage
   Trägerbahngeschwindigkeit: 20m/min
   Zugkraft Abwicklung: 600 N
   Auftragswerk: Streichtisch mit Streichmesser
Trocknung: Vortrocknung Infrarot
   Haupttrocknung: Kanalbeschichtungsanlage mit 10 Trockenzonen
   1. Zone 60 °C
   2. Zone 70 °C
   3. Zone 80 °C
   4. Zone 90 °C
   5. Zone 100 °C
   6. Zone 100 °C
   7. Zone 120 °C
   8. Zone 140 °C
   9. Zone 140 °C
   10. Zone 70 °C
Klebtechnische Daten:
   Klebkraft Stahl (300 mm/min): 8,6 N/cm
   Klebkraft Polyethylen (30 mm/min): 4,9 N/cm
   Scherstandzeit Stahl (1 kg/260 mm²): 42 min
   Scherstandzeit Stahl 40 °C (1 kg/260 mm²): 17 min

Dieses Montageband zeichnet sich durch eine relativ geringe Einreißfestigkeit in Querrichtung (5,7 N) aus und lässt sich trotz der großen Breite mit sauberen Kanten abreißen.

### Beispiel 3

Auf einer Blasfolienanlage wird eine Folie hergestellt. Die eine Schicht ist 40 µm stark und besteht aus einem Compound
79,7 Gew.-% eines Ethylencopolymers mit Zn-lonen (Novex M21G764),
0,3 Gew.-% Irganox 1010,
20 Gew.-% Melamincyanurat (Melapur MC25),
die andere ist 60 µm stark und besteht zu
89,7 Gew.-% aus EVA (LD 360JD),
5 Gew.-% Weißbatch (TPM1005E4 WHITE)
5 Gew.-% Mattierungsmittelbatch (LCC 70) und
0,3 Gew.-% Irganox 1010.

Die so hergestellte Trägerfolie wird anschließend auf der nicht eingefärbten Seite einer Coronavorbehandlung unterzogen.

### Herstellung der Haftklebemasse und Beschichtung:

Acronal V205 der Firma BASF, eine Acrylat-Copolymer-Emulsion auf Basis von Methylacrylat, Styren und Vinylacetat mit einem Feststoffgehalt von 69 Gew.-%, wird mit 0,3 Gew.-% (bezogen auf Feststoffgehalt) Latekoll D (BASF) gemischt. Der so erhaltene Compound wird mit Ammoniak leicht alkalisch eingestellt, so dass die verdickenden Eigenschaften von Latekoll D wirksam werden.

Die so erhaltene Dispersionshaftklebemasse wird mit einem Streichmesser mit einem Spalt von 38 µm auf ein 70 µm dickes silikonisiertes Trennpapier mit einer Schichtdicke von 150 g/m² (trocken) beschichtet. Das beschichtete Material wird in einen Vortrockenkanal eingefahren und mittels einer Infrarotquelle vorgetrocknet. Anschließend erfolgt die Haupttrocknung in einem Kanaltrockner mit unterschiedlichen Trockenzonen. In einem Folgeschritt wird die beschriebene flammvorbehandelte coextrudierte Polyethylenfolie aufkaschiert. Das kaschierte Material wird zur Rolle aufgewickelt.
Technische Bedingungen:
   Maschine: Produktionsbeschichtungsanlage
   Trägerbahngeschwindigkeit: 20 m/min
   Zugkraft Abwicklung: 600 N
   Auftragswerk: Streichtisch mit Streichmesser
Trocknung: Vortrocknung Infrarot
   Haupttrocknung: Kanalbeschichtungsanlage mit 10 Trockenzonen
   1. Zone 60 °C
   2. Zone 70 °C
   3. Zone 80 °C
   4. Zone 90 °C
   5. Zone 100 °C
   6. Zone 100 °C
   7. Zone 120 °C
   8. Zone 140 °C
   9. Zone 140 °C
   10. Zone 70 °C
Klebtechnische Daten:
   Klebkraft Stahl (300 mm/min): 8 N/cm
   Klebkraft Polyethylen (30 mm/min): 4,5 N/cm
   Scherstandzeit Stahl (1 kg/260 mm²): 49 min
   Scherstandzeit Stahl 40 °C (1 kg/260 mm²): 20 min

Dieses Montageband zeigt eine leicht matte Oberfläche.

### Beispiel 4

Im Blasverfahren wird eine Folie aus 67 Gew.-% eines Ethylencopolymers mit Li-lonen (Surlyn 7930), 30 Gew.-% eines EVAs (LD261) und 3 Gew.-% TS 8001 hergestellt. Die Folie wird anschließend beidseitig coronavorbehandelt.

### Herstellung der Haftklebemasse und Beschichtung:

Polytex WP 5000 (A.V.Chemie) wird mit 0,3% (bezogen auf Feststoffgehalt) Latekoll D (BASF) gemischt. Der so erhaltene Compound wird mit Ammoniak leicht alkalisch eingestellt, so dass die verdickenden Eigenschaften von Latekoll D wirksam werden.

Die so erhaltene Dispersionshaftklebemasse wird mit einem Streichmesser mit einem Spalt von 38 µm auf ein 70 µm dickes silikonisiertes Trennpapier mit einer Schichtdicke von 150 g/m² (trocken) beschichtet. Das beschichtete Material wird in einen Vortrockenkanal eingefahren und mittels einer Infrarotquelle vorgetrocknet. Anschließend erfolgt die Haupttrocknung in einem Kanaltrockner mit unterschiedlichen Trockenzonen. In Anschluss wird die beschriebene flammvorbehandelte coextrudierte Ethylencopolymer/EVA-Folie aufkaschiert. Zur Herstellung eines doppelseitigen Klebebandes werden zwei hintereinander durchgeführte Beschichtungen entsprechend dem beschriebenen Produktaufbau aufeinander kaschiert, in dem das Trennpapier der einen Beschichtung ausgedeckt wird und die klebende Seite der einen Beschichtung auf das Trägermaterial aufkaschiert wird.

Das so hergestellte Material wird zur Rolle aufgewickelt.
Technische Bedingungen:
   Maschine: Produktionsbeschichtungsanlage
   Trägerbahngeschwindigkeit: 20 m/min
   Zugkraft Abwicklung: 500 N
   Auftragswerk: Streichtisch mit Streichmesser
Trocknung: Vortrocknung Infrarot
   Haupttrocknung: Kanalbeschichtungsanlage mit 10 Trockenzonen
   1. Zone 60 °C
   2. Zone 70 °C
   3. Zone 80 °C
   4. Zone 90 °C
   5. Zone 100 °C
   6. Zone 100 °C
   7. Zone 120 °C
   8. Zone 140 °C
   9. Zone 140 °C
   10. Zone 70 °C
Klebtechnische Daten:
   1. Seite:
      Klebkraft Stahl (300 mm/min): 8,1 N/cm
      Klebkraft Polyethylen (30 mm/min): 4,3 N/cm
      Scherstandzeit Stahl (1 kg/260 mm²): 55 min
      Scherstandzeit Stahl 40 °C (1 kg/260 mm²): 25 min
   2. Seite:
      Klebkraft Stahl (300 mm/min): 7,6 N/cm
      Klebkraft Polyethylen (30 mm/min): 4,0 N/cm
      Scherstandzeit Stahl (1 kg/260 mm²): 46 min
      Scherstandzeit Stahl 40 °C (1 kg/260 mm²): 24 min

Dieses doppelseitig mit Klebemasse ausgestattete Montageband kann zur Montage von Winddichtungen, Dampfbremsen und Dampfsperren auf verschiedensten Untergründen verwendet werden. Dazu wird das Klebeband zum Beispiel auf Holzsparren verklebt. Nach Entfernung des Trennpapiers kann die Winddichtung, Dampfbremse oder Dampfsperre auf der zweiten Seite des Klebebandes befestigt werden.

### Vergleichsbeispiel 1

Als Klebemasse wird eine wässrige Acrylatdispersion der Firma Rohm and Haas mit der Bezeichnung Primal PS83D (Feststoffgehalt 53 Gew.-%; Ammoniakgehalt < 0,2 Gew.-%; pH-Wert 9,1 bis 9,8) verwendet.

Die Beschichtung einer Trennfolie mit der Klebemasse erfolgt durch ein Drahtrakel. Das Drahtrakel und die Beschichtungsgeschwindigkeit werden so eingestellt, dass nach der Trocknung der beschichteten Folie ein Masseauftrag von ca. 100 g/m² gemessen wird. Beschichtungsgeschwindigkeit und Trocknerleistung werden so eingestellt, dass nach der Trocknung in der Klebemasse ein Wassergehalt von 0,03 bis 0,13 Gew.-% gemessen wird. Eine 70 µm starke Folie eines LDPEs (LD251) wird durch Blasfolien-Extrusion hergestellt. Diese Folie wird einseitig Corona-behandelt. Der Klebemassenauftrag erfolgt auf die Corona-behandelte Seite durch Kaschieren von beschichteter Trennfolie. Nach dem ersten Auftrag einer Schichtdicke von 100 g/m² wird das Trennpapier ausgedeckt und eine zweite Schicht Klebmasse auf die erste Schicht kaschiert, so dass ein Masseauftrag von ca. 200 g/m² erreicht wird.

Das so erhaltene Klebeband ist nur nach hohem Verstrecken und keinesfalls mit sauberer und gerader Reißkante handeinreißbar. Durch die schwierige Trocknung der Acrylatdispersion wird ein erhöhter Prozessaufwand notwendig, da die Herstellung einer Schichtdicke von 200 g/m² in einem Arbeitsgang unwirtschaftlich lange Trocknungsdauern der Beschichtung zur Folge hat. Wird die Klebemasse Wasser ausgesetzt, so quillt sie auf und verliert an Festigkeit und Klebkraft. Der Abfall der Klebkraft nach Alterung beträgt 6 %.

### Vergleichsbeispiel 2

Ein handelsübliches Montageband mit einem Träger aus LDPE (76 µm) und einem Gelege als Armierung umfasst außerdem eine Klebemassenschicht auf Basis einer Acrlyat-Dispersion mit einem Masseauftrag (trocken) von 230 g/m².

Die Montagebänder der Vergleichsbeispiele 1 und 2 sind zwar ausreichend flexibel, um Durchdringungen von Kabeln und Rohren abzudichten, allerdings kaum (Vergleichsbeispiel 1) oder gar nicht (Vergleichsbeispiel 2) handeinreißbar. Die Klebkraft ist nach Alterung um 8 % niedriger als der Frischwert.

### Vergleichsbeispiel 3

Im Blasverfahren wird eine Folie aus 95 Gew.-% eines LDPEs (LD251) und 5 Gew. % eines Antioxidansmasterbatches (PPM 1553, Polyplast Müller) hergestellt. Die coronabehandelte Seite wird mit einer Haftvermittlerschicht aus Naturkautschuk, Cyclokautschuk und 4,4'-Diisocyanato-diphenylmethan (Lösungsmittel Toluol) von 0,6 g/m² beschichtet und getrocknet. Die Klebmassenbeschichtung wird direkt auf die Haftvermittlerschicht mittels Kommarakel mit einem Auftragsgewicht von 80 g/m² (bezogen auf Trockensubstanz) aufgetragen. Die Klebmasse besteht aus einer Lösung einer Naturkautschukklebemasse in n-Hexan mit einem Feststoffgehalt von 30 Gewichtsprozent. Diese besteht aus
- 50 Teilen: Naturkautschuk,
- 10 Teilen: Zinkoxid,
- 3 Teilen: Kolophoniumharz,
- 6 Teilen: Alkylphenolharz,
- 17 Teilen: Terpenphenolharz,
- 12 Teilen: Poly-β-Pinenharz,
- 1 Teil: Antioxidans Irganox 1076 und
- 2 Teilen: mineralischem Öl.

Die Trocknung des Nachstriches erfolgt im Trockenkanal bei 100 °C. Die Folie wird unmittelbar dahinter in einem Verbundschneidautomaten mit einem Messerbalken mit scharfen Klingen in 19 mm Abstand zu Rollen auf Standardklebebandkernen (3 Zoll) geschnitten.

Neben der mangelhaften Handeinreißbarkeit ist diese Ausführung des Montagebandes nicht alterungsbeständig; die Klebkraft nach Alterung beträgt lediglich 40 % des ursprünglichen Wertes.

**Tabelle 1: Eigenschaften der Beispiele und Vergleichsbeispiele**

| | Foliendicke [µm] | Klebkraft Stahl [N/cm] | Klebkraft auf PE [N/cm] | Scherstandzeit [min] | Maximal-kraft MD* [N/cm] | Reißdehnung MD* [%] | Einreißfestigkeit CD [N] | Weiterreißwiderstand CD [N] |
|---|---|---|---|---|---|---|---|---|
| Beispiel 1 | 70 | 7,3 | 2,0 | 3000 | 13 | 190 | 4,8 | 10 |
| Beispiel 2 | 115 | 8,6 | 4,9 | 42 | 22 | 320 | 5,7 | 18 |
| Beispiel 3 | 100 | 8,0 | 4,5 | 49 | 7 | 190 | 5,3 | 14 |
| Beispiel 4 | 120 | 8,1 | 4,3 | 55 | 26 | 290 | 6,5 | 18 |
| Vergleichs-beispiel 1 | 70 | 7,9 | 4,4 | 39 | 18 | 410 | 7,1 | 28 |
| Vergleichs-beispiel 2 | 76 | 9,3 | 6,6 | 3000 | 19 | 380 | 9,0 | 32 |
| Vergleichs-beispiel 3 | 70 | 5,9 | 3,2 | 2500 | 10 | 140 | 7,3 | 30 |

| | | | | | | | | |
|---|---|---|---|---|---|---|---|---|
| *an mit Klingen geschnittenen Mustern MD: machine direction CD: cross direction | | | | | | | | |

Wie aus der Tabelle deutlich hervorgeht, ist das erfindungsgemäße Montageband den Klebebändern der Vergleichsbeispiele sowohl in der Einreiß- als auch in der Weiterreißfestigkeit überlegen. Die mit beiden Messmethoden erreichten Werte liegen unter denen der Vergleichsbeispiele und zeigen damit die besonders vorteilhafte Handeinreißbarkeit des erfindungsgemäßen Montagebands. Gleichzeitig ist das Trägermaterial hochflexibel, so dass sich das erfindungsgemäße Montageband im Gegensatz zu Montagebändern mit handeinreißbaren Papierträgern besonders gut auf unebenen Untergründen verkleben lässt.

Polyacrylat-Heißschmelz-Haftklebemassen sind den Acrylat-Dispersions-Haftklebemassen in den Scherstandzeiten überlegen. Die Dispersions-Haftklebemassen weisen allerdings die höheren Klebkräfte auf.

Die Nachteile der nichterfindungsgemäßen Klebebänder der Vergleichsbeispiele sind im jeweiligen Beispieltext beschrieben.

## Patentansprüche

1. Verwendung eines Montagebandes zum Verkleben auf rauen und/oder verschmutzten Oberflächen, bevorzugt als ein- beziehungsweise doppelseitig klebendes Montageband für die Verklebung von Winddichtungen, Dampfbremsen und Dampfsperren, bestehend aus einer Trägerfolie und einer zumindest einseitig auf der Trägerfolie aufgebrachten Klebemasse,
wobei die Trägerfolie ein Copolymer aus
(a) einem α-Olefin der Formel R-CH=CH₂, wobei R Wasserstoff oder ein Alkylrest mit 1 bis 10 Kohlenstoffatomen ist, und
(b) einer α,β-ethylenisch ungesättigten Carbonsäure aus 3 bis 8 Kohlenstoffatomen sowie (c) optional aus einem weiteren monoethylenisch ungesättigten Monomer, wobei die Carbonsäuregruppen des Copolymers zu 10 bis 90 % durch Neutralisation mit Metallionen substituiert sind, enthält
und die Haftklebemasse ein Polyacrylat ist.

2. Verwendung nach Anspruch 1,
**dadurch gekennzeichnet, dass**
**das** Metallion des Copolymers ein- bis dreiwertig ist, vorzugsweise den Gruppen I, II, III, IV-A und VII des Periodensystems entstammt, besonders bevorzugt aus der Gruppe der Alkalimetalle, insbesondere Natrium.

3. Verwendung nach Anspruch 1 oder 2,
**dadurch gekennzeichnet, dass**
der Anteil an dem Copolymer in der Trägerfolie mindestens 10 Gew.-% und vorzugsweise mindestens 50 Gew.-% beträgt.

4. Verwendung nach zumindest einem der Ansprüche 1 bis 3,
**dadurch gekennzeichnet, dass**
der Schmelzindex des Copolymers zwischen 0,2 und 10 g/10 min, insbesondere zwischen 0,4 und 5 g/10 min bei 2,16 kg und 190 °C liegt.

5. Verwendung nach zumindest einem der vorhergehenden Ansprüche,
**dadurch gekennzeichnet, dass**
die Trägerfolie durch Blasextrusion hergestellt ist.

6. Verwendung nach zumindest einem der vorhergehenden Ansprüche,
**dadurch gekennzeichnet, dass**
das Längsstreckverhältnis (Verhältnis Wickelgeschwindigkeit der Folie zu Geschwindigkeit der Schmelze in der Düse) 2 bis 25, vorzugsweise 5 bis 10 beträgt, die Frostlinie kleiner als 160 cm ist,
das Längsstreckverhältnis dividiert durch die Frostlinie größer als 0,1 cm⁻¹ vorzugsweise größer als 0,2 cm⁻¹ ist,
das Aufblasverhältnis im Bereich von 1 bis 4, vorzugsweise von 1,8 bis 2,5 liegt und/oder
der Düsenspalt im Bereich von 1 bis 1,6 mm liegt.

7. Verwendung nach zumindest einem der vorhergehenden Ansprüche,
**dadurch gekennzeichnet, dass**
die Dicke der Folienschicht 30 bis 150 µm, insbesondere 50 bis 100 µm,
die Reißdehnung (MD) 150 bis 500 %, vorzugsweise 150 bis 300 %, die Reißkraft (MD) 6 bis 40 N/cm, vorzugsweise 8 bis 15 N/cm,
die Einreißfestigkeit (CD) zwischen 3,0 und 6,7 N, vorzugsweise zwischen 3,0 und 5,5 N und/oder
der Weiterreißwiderstand (CD) 5 bis 20 N, vorzugsweise 8 bis 15 N beträgt.

8. Verwendung nach zumindest einem der vorhergehenden Ansprüche,
**dadurch gekennzeichnet, dass**
die copolymerhaltige Folienschicht mit einem weiteren Polymer, insbesondere einem auf Ethylenbasis, abgemischt ist.

9. Verwendung nach zumindest einem der vorhergehenden Ansprüche,
**dadurch gekennzeichnet, dass**
die copolymerhaltige Folienschicht mit einer weiteren Folienschicht coextrudiert ist, welche ein Polymer, insbesondere eines auf Ethylenbasis, enthält, wobei das Polymer vorzugsweise einen Schmelzindex von weniger als 10 g/10 min, insbesondere von weniger als 6 g/10 min, aufweist.

10. Verwendung nach zumindest einem der vorhergehenden Ansprüche,
**dadurch gekennzeichnet, dass**
die Haftklebemasse eine Polyacrylathaftklebemasse ist, bevorzugt ein in Wasser dispergiertes Polyacrylat oder ein Gemisch eines Polyacrylates mit einer alterungsstabilen Harzdispersion.

11. Verwendung nach zumindest einem der vorhergehenden Ansprüche,
**dadurch gekennzeichnet, dass**
die Haftklebemasse eine thermisch vernetzende Polyacrylat-Heißschmelzklebemasse ist.

12. Verwendung nach zumindest einem der vorhergehenden Ansprüche,
**dadurch gekennzeichnet, dass**
zwischen Folien- und Kleberschicht eine Primerschicht vorhanden ist,
die Menge der Kleberschicht 50 bis 300 g/m², vorzugsweise 150 bis 250 g/m² beträgt,
die Klebkraft 90° auf Stahl 10 bis 13 N/cm und/oder die Scherstandzeit mehr als 150 min bei 1 kg Belastung beträgt.

13. Verwendung nach zumindest einem der vorhergehenden Ansprüche,
**dadurch gekennzeichnet, dass**
die Klebemasse vermittels einer Flamm- oder Coronavorbehandlung oder einer Haftvermittlerschicht, welche durch Coextrusion oder Beschichtung aufgebracht wird, mit der Oberfläche der Trägerfolie verbunden ist.

14. Verwendung nach zumindest einem der vorhergehenden Ansprüche, wobei das Montageband durch ein Verfahren geschnitten wird, welches durch raue Schnittkanten zur leichteren Handeinreißbarkeit führt, wobei die Bruchdehnung der so geschnittenen Wickelfolienrollen vorzugsweise um mindestens 30 % niedriger liegt als beim Schnitt mit scharfen Klingen.
